(19) Europäisches Patentamt
European Patent Office
Office européen des brevets

(11) EP 2 284 572 B1

(12) EUROPEAN PATENT SPECIFICATION

(45) Date of publication and mention
of the grant of the patent:
**20.03.2013 Bulletin 2013/12**

(51) Int Cl.:
*G01S 19/25* (2010.01)  *H04B 1/7075* (2011.01)

(21) Application number: **09168072.8**

(22) Date of filing: **18.08.2009**

(54) **Signal acquisition systems**

Signalerwerbssysteme

Systèmes d'acquisition de signaux

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.08.2009 US 189426 P**
**14.08.2009 US 541518**

(43) Date of publication of application:
**16.02.2011 Bulletin 2011/07**

(73) Proprietor: **Maishi Electronic (Shanghai) Ltd.**
**Zhang Jiang Hi-Tech Park**
**Shanghai**
**201203 (CN)**

(72) Inventors:
• **Yu, Xiaoguang**
**430074, Wuhan (CN)**
• **Huang, Yishao Max**
**Santa Clara, CA 95054 (US)**
• **Huang, Haiquan**
**610041, Chengdu Sichuan (CN)**

(74) Representative: **Lippert, Stachow & Partner**
**Patentanwälte**
**Postfach 30 02 08**
**51412 Bergisch Gladbach (DE)**

(56) References cited:
WO-A2-2009/108915    US-A1- 2003 227 963
US-A1- 2006 274 821    US-A1- 2008 002 797
US-A1- 2008 303 713    US-B1- 7 064 709

**Description**

TECHNICAL FIELD

The present invention generally relates to radio communication and more specifically relates to system and method for signal acquisition in radio communication.

BACKGROUND

Global positioning system (GPS) is well known as an advanced technology that can be use to determine a location of an object on or above the earth. In conventional GPS systems, GPS receivers are attached to objects to track GPS signals and demodulate the GPS signals into GPS navigation messages which can include the satellite clock error, ephemeris, almanac for each satellite in the constellation, and the information about coordinated universal time, etc., and to determine the location of the objects based on the demodulated navigation messages. In addition, the GPS receiver also calculates the GPS time at which the GPS receiver receives the GPS signals according to the demodulated navigation messages. Usually, before tracking and demodulating a GPS signal, the GPS receiver needs to acquire the GPS signal. Thus, the GPS receiver may first need to determine a boundary of a navigation data bit in the GPS signal, e.g., a conventional navigation data bit that is 20ms long, and then acquire the GPS signal based on a coherent integration process.

When the GPS receiver is powered off, a real time clock (RTC) can be used to provide a local time of the receiver. However, when the GPS receiver is re-powered on after being powered off for a time interval, the local time from the RTC may not be accurate enough to be used to determine the boundary of the navigation data bit in the GPS signal. Thus, the GPS receiver may need to operate the conventional GPS bit synchronization process to determine the boundary of the navigation data bit, which may take a relatively long time.

In the document US 2006/0274821 A1, there is disclosed a method and system for detecting bit synchronization boundary in a received signal based on a transition in the received signal, wherein the bit synchronization boundary is checked by comparing actual time of a subsequent transition with expected time determined based on a counter.

Document US 2003/0227963 A1 discloses a multiple integration hypothesis C/A code acquisition system which resolves bit boundaries using parallel correlators.

SUMMARY

The present invention provides a global positioning system (GPS) system that includes a receiver for receiving a plurality of global positioning system (GPS) signals from a signal source comprising at least one satellite, as well as a clock module including a counter for providing multiple counter values at multiple time points. The GPS system also includes a system module coupled to the clock module and the receiver, wherein said system module comprises a signal process engine for demodulating said GPS signal into a navigation message including the information of the satellite clock error, ephemeris, almanac for each satellite in the constellation, and the information about coordinated universal time, and wherein said system module comprises a control unit for calculating a GPS time value according to the information included in said navigation message. The system module is capable of obtaining one GPS time value for each time point of said plurality of time points according to the information included in the navigation message. The system module is further capable of determining a relationship between the GPS time value (T) for one time point and the counter value (C) generated at said one time point by calculating a set of parameters based on the counter values and the GPS time value for each time point of said plurality of time points, wherein said parameters determine a relation function between said GPS time value for said each time point and a corresponding counter value of said counter values, wherein said relation function is $T(C) \approx \sum_{k=0}^{n} A_k \times C^k$ , wherein C represents a counter value provided by said clock module at a selected time point, T(C) represents one GPS time value for said selected time point, $A_K$ represents one parameter of said parameters, and n represents a finite positive integer. The system module is further capable of determining an estimated GPS time value based on the relation function and a present counter value from the clock module by applying the function $T'(C') = \sum_{k=0}^{n} A_k \times C'^k$ . The system module further comprises a control unit for determining a boundary of a data bit in a present signal based on the estimated GPS time value,

The present invention also provides a method for acquiring a present signal. The method for acquiring the present signal includes receiving a plurality of global positioning system (GPS) signals and providing multiple counter values by a counter at multiple time points, The method further includes demodulating said GPS signal into a navigation message including the information of the satellite clock error, ephemeris, almanac for each satellite in the constellation, and the information about coordinated universal time, calculating a time value according to the information included in said navigation message and obtaining one GPS time value for each time point of said plurality of time points according to the information included in the navigation message. The method further includes determining a relationship between the GPS time value (T) for one time point and the counter value (C) generated at said one time point by calculating a set of parameters by a system module based on the counter values and the time value for each time point, determining a relation function between said time value for said each time point and a corresponding counter value of said counter values by said parameters, wherein said relation function is $T(C) \approx \sum_{k=0}^{n} A_k \times C^k$, wherein C represents a counter value provided by said clock module at a selected time point, T(C) represents one GPS time value for said selected time point, $A_K$ represents one parameter of said parameters, and n represents a finite positive integer. The method further includes determining an estimated time value based on the relation function and a present counter value from the counter by applying a function $T'(C') = \sum_{k=0}^{n} A_k \times C'^k$ and determining a boundary of a data bit in a present signal based on said estimated time value.

BRIEF DESCRIPTION OF THE DRAWINGS

Features and advantages of embodiments of the claimed subject matter will become apparent as the following detailed description proceeds, and upon reference to the drawings, wherein like numerals depict like parts, and in which:

FIG. 1 depicts a block diagram example of a signal acquisition system, in accordance with one embodiment of the present invention.

FIG. 2 depicts a block diagram example of a signal acquisition system, in accordance with one embodiment of the present invention.

FIG. 3 depicts a block diagram example of a signal acquisition system, in accordance with one embodiment of the present invention.

FIG. 4 depicts a flowchart example of operations performed by a signal acquisition system, in accordance with one embodiment of the present invention.

DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

In one embodiment, the present invention provides a signal acquisition system. The signal acquisition system can be, but is not limited to, a GPS (global positioning system) receiver for acquiring GPS signals from satellites. The GPS receiver includes a counter for providing a set of counter values, and a system module capable of calculating an estimated/corrected time value based on the counter values, so as to acquire the GPS signals.

When the GPS receiver is operating, an acquiring process of the GPS signals and a calculating process of GPS times are performed interactively with each other. For example, after acquiring GPS signals from one or more satellites, the GPS receiver can calculate a current GPS time according to the navigation messages demodulated from the GPS signals. The navigation messages include the information of the satellite clock error, ephemeris, almanac for each satellite in the constellation, and the information about coordinated universal time, etc. In return, based on the current GPS time, the GPS receiver can determine boundaries of navigation data bits in currently received GPS signals, so as to continue acquiring GPS signals from the satellites.

Advantageously, when the GPS receiver is powered off, the counter continues generating counter values. When the GPS receiver is re-powered on, the system module calculates an estimated time value according to a counter value from the counter. Based on the estimated time value, the system module can determine bit boundaries of the navigation data bits, and so as to acquire and track the GPS signals. As a result, the time to first fix (TTFF) of the GPS receiver, which indicates the time delay from the time when the GPS receiver is powered on to the time when the GPS receiver determines a current position of the GPS receiver, can decrease.

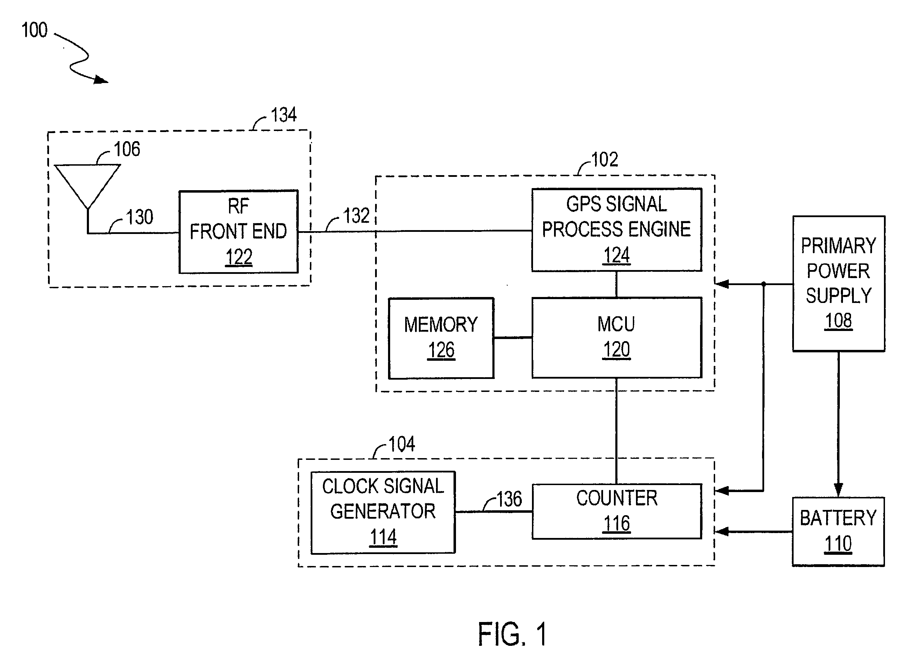

FIG. 1 depicts a block diagram example of a signal acquisition system 100, in accordance with one embodiment of the present invention. The signal acquisition system 100 can be, but is not limited to, a GPS receiver. The GPS receiver 100 can include a clock module 104, a system module 102, and a signal receiver 134.

As shown in FIG. 1, the signal receiver 134 includes an antenna 106 for receiving GPS signals from a signal source, e.g., one or more satellites (not shown in FIG. 1). The signal receiver 134 further includes a radio frequency (RF) front end 122 for amplifying the input signal 130 received via the antenna 106 to a proper amplitude and converting the frequency of the input signal 130 to a desired output frequency. The output signal 132 is transferred from the RF front end 122 to the system module 102. The clock module 104 includes a counter 116 for providing counter values C, and a clock signal generator 114 (e.g., a crystal oscillator) for providing a clock signal 136 to drive the counter 116. For example, the counter value C of the counter 116 increases by 1 in response to each clock pulse of the clock signal 136. The system module 102 coupled to the clock module 104 is capable of calculating an estimated/corrected time value T' based on the counter values C. Thus, if the GPS receiver 100 is re-powered on after being powered off for a time interval, the system module 102 can determine navigation data bit boundaries in currently received GPS signals based on the estimated time value T', so as to re-acquire the GPS signals.

Specifically, in one embodiment, the system module 102 includes a GPS signal process engine 124, a MCU (micro control unit) 120 or a CPU (central process unit) coupled to the GPS signal process engine 124, and a memory 126 coupled to the MCU 120. The system module 102 can acquire, track and demodulate the GPS signals by using the GPS signal process engine 124, the MCU 120, and the memory 126.

In operation, when the GPS receiver 100 is powered by a primary power supply 108, the GPS signal processing engine 124 can acquire GPS signals and demodulate the GPS signals into navigation messages. The MCU 120 can calculate the GPS time value T according to the navigation messages and determine the navigation data bit boundaries in the later received GPS signals according to the GPS time value T. Thus, the GPS signal process engine 124 can keep acquiring, tracking and demodulating GPS signals. Meanwhile, the clock module 104 can increase the counter value C by 1 in response to each clock pulse of the clock signal 136. A relationship between the GPS time value T for a time point and the counter value C generated at the time point can be determined. Advantageously, when the GPS receiver 100 is powered off, the clock module 104 can be powered by a battery 110, and the counter 116 can continue operating. When the GPS receiver 100 is re-powered on after being powered off for a time interval, the GPS receiver 100 may need to re-acquire and re-track GPS signals from the satellites. Based on the determined relationship between the GPS time value T and the counter value C, the MCU 120 can calculate an estimated time value T' according to a present counter value C provided by the counter 116. The GPS receiver 100 can determine the navigation data bit boundaries in the GPS signals according to the estimated time value T'. Thus, the GPS receiver 100 can acquire, track and demodulate the GPS signals.

More specifically, when the GPS receiver 100 is operating, e.g., when the GPS receiver 100 is acquiring, tracking, and demodulating GPS signals properly, the counter 116 can provide multiple counter values $C_1, C_2, C_3, ...C_m$ at multiple GPS time points $T_1, T_2, T_3, ...T_m$ (m is a finite positive integer). The MCU 120 can obtain/calculate a time value for each GPS time point $T_1$-$T_m$ according to a set of acquired GPS signals. Each counter value $C_1$ corresponds to a time value at the GPS time point $T_i$ (i=1, 2, ...m). The memory 126 can store the corresponding data pairs $(T_i, C_i)$ (i=1, 2, ...m).

In one embodiment, a relationship between a time value T(C) for each GPS time point $T_1$-$T_m$ and a corresponding counter value $C_1$-$C_m$ is described by a polynomial equation (1).

$$T(C) = \sum_{k=0}^{\infty} A_k \times C^k , \qquad\qquad (1)$$

where the parameters/coefficients $A_k$ (k=0, 1,2...) can be obtained by mathematical algorithms, e.g., polynomial-fitting method, least-squares procedure, etc. According to equation (1), the time value T(C) can be n approximately equal to

$\sum_{k=0}^{n} A_k \times C^k$ if the integer n is sufficiently large. For example, equation (1) is rewritten as:

$$T(C) \approx \sum_{k=0}^{n} A_k \times C^k = A_0 + A_1 \times C + A_2 \times C^2 \ldots + A_n \times C^n, \qquad (2)$$

The MCU 120 can select $n+1$ pairs of data $(T_i, C_i)$ from the memory 126, e.g., the counter values $C_1$-$C_{n+1}$ and time values for the time points $T_1$-$T_{n+1}$, such that $n+1$ equations can be obtained:

$$T_1 = A_0 + A_1 \times C_1 + A_2 \times C_1^2 \ldots + A_n \times C_1^n; \qquad (2\_1)$$

$$T_2 = A_0 + A_1 \times C_2 + A_2 \times C_2^2 \ldots + A_n \times C_2^n; \qquad (2\_2)$$

$$\ldots$$

$$T_{n+1} = A_0 + A_1 \times C_{n+1} + A_2 \times C_{n+1}^2 \ldots + A_n \times C_{n+1}^n. \qquad (2\_n+1)$$

Thus, the MCU 120 can calculate the parameters $A_0$-$A_n$ based on the counter values $C_1$-$C_{n+1}$ and the time value for each time point $T_1$-$T_{n+1}$.

The parameters $A_0$-$A_n$ can determine a relation function, e.g., the polynomial equation $T(C) \approx \sum_{k=0}^{n} A_k \times C^k$, between a time value for each time point $T_1$-$T_m$ and a corresponding counter value of the counter values $C_1$-$C_m$. Thus, the MCU 120 can determine/calculate an estimated time value T' based on the parameters $A_0$-$A_n$ and a present counter value C' from the counter 116, e.g.,

$$T' = \sum_{k=0}^{n} A_k \times C'^k.$$

In one embodiment, the parameters $A_0$-$A_n$ are calculated when the GPS receiver 100 is going to be powered off, and are stored into the memory 126 before the GPS receiver 100 is powered off. When the GPS receiver 100 is powered off, the counter 116 continues operating and generating counter values $C_{m+1}$, $C_{m+2}$, ...$C_p$. Advantageously, when the GPS receiver 100 is re-powered on, the MCU 120 can access the parameters $A_0$-$A_n$ from the memory 126 and calculate an estimated time value T' based on a present counter value C' (C'=$C_{p+1}$, or $C_{p+2}$, ...) according to equation (3).

$$T' = \sum_{k=0}^{n} A_k \times C'^k = A_0 + A_1 \times C' + A_2 \times C'^2 \ldots + A_n \times C'^n. \qquad (3)$$

In another embodiment, the parameters $A_0$-$A_n$ are calculated during an initiation process when the GPS receiver 100 is re-powered on. For example, when the GPS receiver 100 is re-powered on, the MCU 120 accesses the data pairs $(T_i, C_i)$ from the memory 126, and calculates the parameters $A_0$-$A_n$ based on the data pairs $(T_i, C_i)$, and then calculates an estimated time value T' based on the parameters $A_0$-$A_n$ and a present counter value C' (C'=$C_{p+1}$, or $C_{p+2}$, ...).
If the integer n is large enough, the error of the estimated time value T' can be less than a predetermine time interval (e.g., a half of a code period of a GPS L1 C/A code, e.g., 0.5ms). Thus, the MCU 120 can determine a boundary of a navigation data bit in the present GPS signal based on the estimated time value T'. In other words, when the GPS receiver 100 is re-powered on, the system module 102 can acquire the present GPS signal received by the signal receiver 134 properly based on the parameters $A_0$-$A_n$ and the present counter value C'.
By calculating the estimated time value T', the GPS receiver 100 may not need to perform the lengthy conventional GPS bit synchronization process to determine the navigation data bit boundaries in the GPS signal. Consequently, the TTFF of the GPS receiver 100 can decrease. In addition, a low cost crystal oscillator (e.g., a 32.768K crystal) can be implemented as the clock signal generator 114, so as to reduce the cost of the GPS receiver 100.

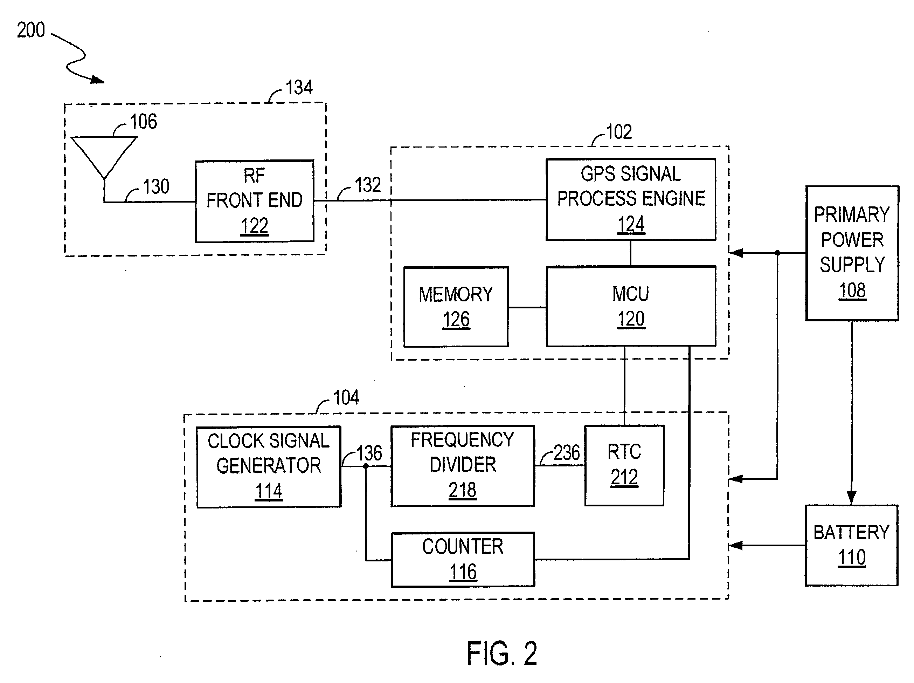

FIG. 2 depicts another block diagram example of a signal acquisition system 200, in accordance with one embodiment of the present invention. Elements labeled the same as in FIG. 1 have similar functions. In the example of FIG. 2, the clock module 104 also includes a real time clock (RTC) 212 coupled to the MCU 120. The RTC 212 can provide a local time which includes the information of year, month, day, hour, minute, and second. In one embodiment, the RTC 212 is driven by the clock signal generator 114. A frequency divider 218 coupled between the clock signal generator 114 and the RTC 212 is capable of frequency-dividing the clock signal 136, such that the RTC 212 is driven by a pulse signal 236 having a proper frequency. In another embodiment, the RTC 212 is driven by a separate clock signal generator (not shown in FIG. 2).

In one embodiment, the GPS time information is written into the memory of the RTC 212. The RTC 212 can be coupled to a display system (not shown in FIG. 1) for showing a local time to a user. In addition, the RTC 212 can be used to determine whether the counter values are correct. For example, the RTC 212 can count for a predetermined time period. If an increment of the counter value exceeds a desired/predetermined range when the predetermined time period expires, it can indicate there may be an error in the counter value or the counter value may have exceeded a maximum counter value. Furthermore, when the GPS receiver 100 is re-powered on after being powered off for a time interval, the local time generated by the RTC 212 can be used for the satellite acquisition process, e.g., to estimate which satellites are available in the visible range of the GPS receiver 100.

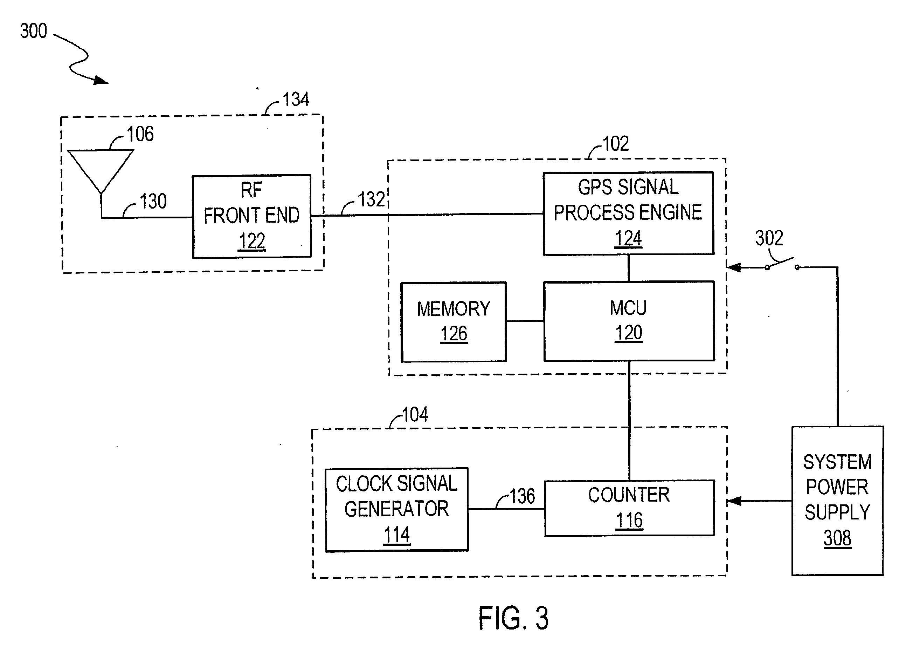

FIG. 3 depicts another block diagram example of a signal acquisition system 300, in accordance with one embodiment of the present invention. Elements labeled the same as in FIG. 1 have similar functions. In the example of FIG. 3, a system power supply 308 can be coupled to the clock module 104 directly, and coupled to the system module 102 via a switch 302. When the switch 302 is turned on, the whole GPS receiver 100 is powered by the system power supply 308. When the switch 302 is turned off, the system module 102 is powered off, and in the mean time the clock module 104 is powered by the system power supply 308 and continues to operate. In this embodiment, the battery 110 (shown in FIG. 1) can be omitted.

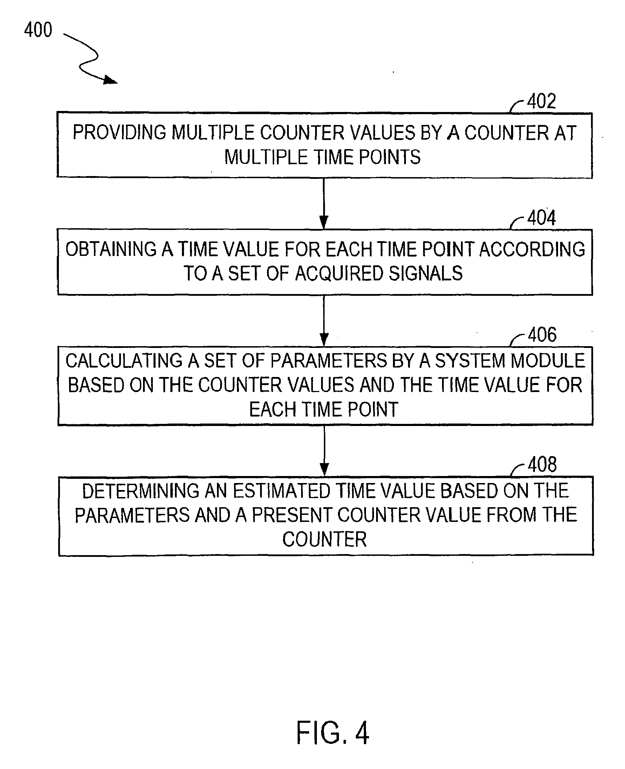

FIG. 4 depicts a flowchart example 400 of operations performed by a signal acquisition system, in accordance with one embodiment of the present invention. FIG. 4 is described in combination with FIG. 1, FIG. 2 and FIG. 3.

In block 402, the counter 116 provides multiple counter values $C_1$-$C_{n+1}$ at multiple time points $T_1$-$T_{n+1}$. In block 404, the system module 102 obtains a time value for each time point of the time points $T_1$-$T_m$ according to a set of acquired signals, e.g., GPS signals received by the signal receiver 134. For example, the GPS signal process engine 124 demodulates the GPS signals into navigation messages, such that the MCU 120 calculates time values of the time points $T_1$-$T_{n+1}$ according to the navigation messages.

In block 406, the MCU 406 also calculates a set of parameters $A_0$-$A_n$ based on the counter values $C_1$-$C_{n+1}$ and the time value for each time point $T_1$-$T_{n+1}$. When the GPS receiver 100 is re-powered on after being powered off for a time interval, the system module 102 can determine an estimated time value T' based on the parameters $A_0$-$A_n$ and a present counter value C' from the counter 116, as described in block 408. As a result, the MCU 120 can re-acquire GPS signals based on the estimated time value T'.

Accordingly, the present invention provides a signal acquisition system (e.g., a GPS receiver) with application of a counter. The counter can provide counter values for calculating an estimated time value. The GPS receiver can acquire, track and demodulate the GPS signals based on the estimated time value. The present invention also provides an exemplary method to determine a relationship between the GPS time and the counter value, which can be used to obtain the estimated time value. Such signal acquisition system can be used in many applications, e.g., GPS receivers, portable navigation devices, mobile phones, etc.

[036] While the foregoing description and drawings represent embodiments of the present invention, it will be understood that various additions, modifications and substitutions may be made therein without departing from the scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

**Claims**

**1.** A signal acquisition system (100) comprising:

a receiver (134) for receiving a plurality of global positioning system -GPS- signals from a signal source comprising at least one satellite; a clock module (104) including a counter (116) for providing a plurality of counter values C at a plurality of time points; and

a system module (102) coupled to said clock module (104) and said receiver (134), wherein said system module (102) comprises a signal process engine (124) for demodulating said GPS signal into a navigation message including the information of the satellite clock error, ephemeris, almanac for each satellite in the constellation, and the information about coordinated universal time, and wherein said system module (102) comprises a control unit for calculating a GPS time value T according to said information included in said navigation message,

**characterized in that**

said system module (102) is capable of obtaining one GPS time value T for each time point of said plurality of time points according to said Information included in said navigation message, and wherein said system module (102) is capable of determining a relationship between the GPS time value T for one time point and the counter value C generated at said one time point by calculating a plurality of parameters $A_K$ based on said counter values C and said GPS time values T for each time point of said plurality of time points, wherein said parameters $A_K$ determine a relation function T(C) between said GPS time value T for said each time point and a corresponding counter value C of said counter values, wherein said relation function is $T(C) \approx \sum_{k=0}^{n} A_k \times C^k$ ,

wherein C represents a counter value provided by said clock module at a selected time point, T(C) represents one GPS time value for said selected time point, $A_K$ represents one parameter of said parameters, and n represents a finite positive integer, and wherein said system module (102) is capable of determining an estimated GPS time value T' based on said relation function and a present counter value C' from said clock module (104) by applying a function

$T'(C') = \sum_{k=0}^{n} A_k \times C'^k$ ,  wherein said control unit (120) is capable of determining a boundary of a data bit in a present signal based on said estimated GPS time value T'.

2. The signal acquisition system (100) as claimed in claim 1, wherein said system module (102) comprises a memory (126) for storing said plurality of counter values C provided at said plurality of time points and storing a plurality of time values T indicative of said time points, and wherein said time values T are calculated by said system module (102) according to said navigation message.

3. The signal acquisition system (100) as claimed in claim 1, wherein said clock module (104) continues providing counter values C when the signal acquisition system (100) is powered off, wherein said system module (102) determines said estimated time value T' based on said relation function and on said present counter value C' from said clock module (104) when the signal acquisition system (100) is re-powered on.

4. A method for acquiring a present signal comprising:

receiving a plurality of global positioning system -GPS- signals;
providing a plurality of counter values C by a counter (116) at a plurality of time points;
demodulating said GPS signal into a navigation message including the information of the satellite clock error, ephemeris, almanac for each satellite in the constellation, and the information about coordinated universal time; and
calculating a time value T according to the information included in said navigation message;

**characterized in**

obtaining one GPS time value T for each time point of said plurality of time points according to the information included in said navigation message;
determining a relationship between the GPS time value T for one time point and the counter value C generated at said one time point by calculating a plurality of parameters $A_K$ by a system module (102) based on said counter values C and said time value T for said each time point and determining a relation function between said time value T for said each time point and a corresponding counter value C of said counter values by said parameters $A_K$,

wherein said relation function is $T(C) \approx \sum_{k=0}^{n} A_k \times C^k$ , wherein C represents a counter value provided by said clock module at a selected time point, T(C) represents one GPS time value for said selected time point, $A_K$ represents one parameter of said parameters, and n represents a finite positive integer;
determining an estimated time value T' based on said relation function and a present counter value C' from said counter (116) by applying a function $T'(C') = \sum_{k=0}^{n} A_k \times C'^k$ ; and

determining a boundary of a data bit in a present signal based on said estimated time values T'.

5. The method as claimed in claim 4, wherein said calculating said plurality of parameters comprises:

storing said plurality of counter values C provided at said plurality of time points to a memory (126);
storing a plurality of time values T indicative of said time points to said memory (126), wherein said time values T are calculated by said system module (102) according to navigation message; and
calculating said plurality of parameters $A_K$ based on said plurality of counter values C and said plurality of time values T.

6. The method as claimed in claim 4, wherein said determining said estimated time value T' comprises:

continuing providing counter values C by said counter (116) when not acquiring a present signal; and
determining said estimated time value T' based on said relation function and based on said present counter value C' from said counter (116) when re-acquiring a present signal.

**Patentansprüche**

1. Signalerfassungssystem (100), umfassend:

einen Empfänger (134) für den Empfang einer Mehrzahl von GPS-Signalen eines Positionsbestimmungssystems von einer Signalquelle, die mindestens einen Satelliten umfasst;
ein Taktmodul (104) mit einem Zähler (116) für die Bereitstellung einer Mehrzahl von Zählwerten C an einer Mehrzahl von Zeitpunkten; und
ein Systemmodul (102), das mit dem Taktmodul (104) und mit dem Empfänger (134) verbunden ist, wobei das Systemmodul (102) eine Signalverarbeitungs-Engine (124) umfasst für die Demodulation des GPS-Signals in eine Navigationsmitteilung, die Taktfehler-,
Ephemeriden- und Almanach-Informationen des Satelliten für jeden Satelliten in der Konstellation und die Information über die koordinierte Universalzeit enthält, und wobei das Systemmodul (102) eine Steuereinheit für die Berechnung eines GPS-Zeitwerts T gemäß der in der Navigationsmitteilung enthaltenen Informationen umfasst,

**dadurch gekennzeichnet,**
**dass** das Systemmodul (102) geeignet ist für die Beschaffung eines GPS-Zeitwerts T für jeden Zeitpunkt der Mehrzahl von Zeitpunkten gemäß den in der Navigationsmitteilung enthaltenen Informationen und dass das Systemmodul (102) geeignet ist für die Bestimmung einer Relation zwischen dem GPS-Zeitwert T für einen Zeitpunkt und dem an diesem Zeitpunkt generierten Zählwert C durch die Berechnung einer Mehrzahl von Parametern $A_K$ auf der Basis der Zählwerte C und der GPS-Zeitwerte T für jeden Zeitpunkt der Mehrzahl von Zeitpunkten,
wobei die Parameter $A_K$ eine Relationsfunktion T(C) zwischen dem GPS-Zeitwert T für jeden Zeitpunkt und einem entsprechenden Zählwert C der Zählwerte bestimmen, wobei die Relationsfunktion

$$T(C) \approx \sum_{k=0}^{n} A_k \times C^k$$

ist, wobei C einen Zählwert angibt, der an dem gewählten Zeitpunkt von dem Taktmodul geliefert wird, T(C) einen GPS-Zeitwert für den gewählten Zeitpunkt, $A_K$ einen Parameter der Parameter und n eine finite positive Ganzzahl und wobei das Systemmodul (102) geeignet ist, einen geschätzten GPS-Zeitwert T' auf der Basis der Relationsfunktion und eines vorliegenden Zählwerts C' von dem Taktmodul (104) zu bestimmen, indem eine Funktion

$$T'(C') = \sum_{k=0}^{n} A_k \times C'^k$$

angewendet wird, wobei die Steuereinheit (120) geeignet ist, eine Grenze eines Datenbits in einem vorliegenden Signal auf der Basis des geschätzten GPS-Zeitwerts T' zu bestimmen.

2. Signalerfassungssystem (100) nach Anspruch 1, wobei das Systemmodul (102) einen Speicher (126) zum Speichern der Mehrzahl von Zählwerten C, die an der Mehrzahl von Zeitpunkten geliefert werden, und zum Speichern einer Mehrzahl von Zeitwerten T, die auf die Zeitpunkte hinweisen, umfasst und wobei die Zeitwerte T gemäß der Navigationsmitteilung durch das Systemmodul (102) berechnet werden.

3. Signalerfassungssystem (100) nach Anspruch 1, wobei das Taktmodul (104) die Lieferung von Zählwerten C fortsetzt, wenn das Signalerfassungssystem (100) abgeschaltet wird, wobei das Systemmodul (102) den geschätzten Zeitwert T' auf der Basis der Relationsfunktion und des vorliegenden Zählwerts C' von dem Taktmodul (104) bestimmt, wenn das Signalerfassungssystem (100) erneut angeschaltet wird.

4. Verfahren zur Erfassung eines vorliegenden Signals, umfassend:

den Empfang einer Mehrzahl von GPS-Signalen eines Positionsbestimmungssystems;
das Bereitstellen einer Mehrzahl von Zählwerten C durch einen Zähler (116) an einer Mehrzahl von Zeitpunkten;
das Demodulieren der GPS-Signale in eine Navigationsmitteilung, die die Information des Taktfehlers, der Ephemeriden, des Almanachs des Satelliten für jeden Satelliten in der Konstellation und die Information über die koordinierte Universalzeit enthält;
und das Berechnen eines Zeitwerts T gemäß der in der Navigationsmitteilung enthaltenen Information;

**gekennzeichnet durch**
den Erwerb eines GPS-Zeitwerts T für jeden Zeitpunkt der Mehrzahl von Zeitpunkten gemäß der in der Navigationsmitteilung enthaltenen Information;
das Bestimmen einer Relation zwischen dem GPS-Zeitwert T für einen Zeitpunkt und dem an dem einen Zeitpunkt generierten Zählwert C **durch** das Berechnen einer Mehrzahl von Parametern $A_K$ **durch** ein Systemmodul (102) auf der Basis der Zählwerte C und des Zeitwerts T für jeden Zeitpunkt und das Bestimmen einer Relationsfunktion zwischen dem Zeitwert T für jeden Zeitpunkt und einem entsprechenden Zählwert C der Zählwerte **durch** die Parameter $A_K$, wobei die Relationsfunktion

$$T(C) \approx \sum_{k=0}^{n} A_k \times C^k$$

ist, wobei C einen Zählwert darstellt, der an einem gewählten Zeitpunkt durch das Taktmodul geliefert wird, T(C) einen GPS-Zeitwert für den gewählten Zeitpunkt, $A_K$ einen Parameter der Parameter und n eine finite positive Ganzzahl;
das Bestimmen eines geschätzten Zeitwerts T' auf der Basis der Relationsfunktion und eines vorliegenden Zählwerts C' von dem Zähler (116) **durch** Anwendung einer Funktion

$$T'(C') = \sum_{k=0}^{n} A_k \; x \, C'^k$$

und das Bestimmen einer Grenze eines Datenbits in einem vorliegenden Signal auf der Basis des geschätzten Zeitwerts T'.

5. Verfahren nach Anspruch 4, wobei die Berechnung der Mehrzahl von Parametern umfasst:

das Speichern der Mehrzahl von Zählwerten C, die einem Speicher (126) an einer Mehrzahl von Zeitpunkten zur Verfügung gestellt werden;
das Speichern einer Mehrzahl von Zeitwerten T, die auf die Zeitpunkte hinweisen, in dem Speicher (126), wobei die Zeitwerte gemäß der Navigationsmitteilung durch das Systemmodul (102) berechnet werden;
und das Berechnen der Mehrzahl von Parametern $A_K$ auf der Basis der Mehrzahl von Zählwerten C und der Mehrzahl von Zeitwerten T.

6. Verfahren nach Anspruch 4, wobei die Bestimmung des geschätzten Zeitwerts T' umfasst:

die fortgesetzte Lieferung von Zählwerten C durch den Zähler (116), wenn ein vorliegendes Signal nicht erfasst wird; und
das Bestimmen des geschätzten Zeitwerts T' auf der Basis der Relationsfunktion und auf der Basis des vorliegenden Zählwerts C' von dem Zähler (116), wenn ein vorliegendes Signal erneut erfasst wird.

**Revendications**

1. Système d'acquisition de signaux (100), comprenant:

un récepteur (134) pour recevoir une pluralité de signaux d'un système de localisation GPS d'une source de signaux comprenant au moins un satellite ;
un module d'horloge (104) comprenant un compteur (116) pour fournir une pluralité de valeurs de comptage C à une pluralité d'instants ; et
un module de système (102) couplé audit module d'horloge (104) et audit récepteur (134), ledit module de système (102) comprenant une machine de traitement de signal (124) conçue pour démoduler ledit signal GPS en un message de navigation incluant l'information sur l'erreur d'horloge, les éphémérides, l'almanach de satellite pour chacun des satellites dans la constellation et l'information sur le temps universel coordonné, et ledit module de système (102) comprenant une unité de contrôle conçue pour calculer une valeur de temps GPS T conformément à l'information inclue dans le message de navigation, **caractérisé en ce que** ledit module de système (102) est capable d'obtenir une valeur de temps GPS T pour chaque instant de la pluralité d'instants conformément à ladite information inclue dans le message de navigation, et ledit module de système (102) étant capable de déterminer une relation entre la valeur de temps GPS T pour un instant et la valeur de comptage C générée audit instant par le calcul d'une pluralité de paramètres $A_K$ à base desdites valeurs de comptage C et les valeurs de temps GPS T pour chaque instant de la pluralité d'instants, lesdits paramètres $A_K$ déterminant une fonction de relation T(C) entre ladite valeur de temps GPS T pour chaque instant et une valeur de comptage C correspondante desdites valeurs de comptage, ladite fonction de relation étant

$$T(C) \approx \sum_{k=0}^{n} A_k \; x \, C^k$$

dans lequel est dénoté par C une valeur de comptage fournie par ledit module d'horloge à un instant sélectionné, par T(C) une valeur de temps GPS pour ledit instant sélectionné, par $A_k$ un paramètre desdits paramètres, et par n un nombre entier fini, le module de système (102) étant capable de déterminer une valeur de temps GPS estimée à base de ladite fonction de relation et d'une valeur de comptage présente du module d'horloge (104), en appliquant une fonction de relation

$$T'(C') = \sum_{k=0}^{n} A_k \times C'^k$$

l'unité de contrôle (120) étant capable de déterminer une limite d'un bit de donnés dans un signal présent à base de la valeur de temps GPS T estimée.

2. Système d'acquisition de signaux (100) selon la revendication 1, le module de système (102) comprenant une mémoire (126) pour mémoriser ladite pluralité de valeurs de comptage C fournie à ladite pluralité d'instants et pour mémoriser une pluralité de valeurs de temps T indicative des instants, et lesdites valeurs de temps T étant calculées par le module de système (102) conformément audit message de navigation.

3. Système d'acquisition de signaux (100) selon la revendication 1, le module d'horloge (104) continuant à fournir des valeurs de comptage C lorsque le système d'acquisition de signaux (100) est désactivé, le module de système (102) déterminant ladite valeur de temps T'estimée à base de ladite fonction de relation et de ladite valeur de comptage C' présente du module d'horloge (104) lorsque le système d'acquisition de signaux (100) est activé de nouveau.

4. Procédé pour l'acquisition d'un signal présent, comprenant les étapes de:

recevoir une pluralité de signaux d'un système de localisation GPS ;
fournir une pluralité de valeurs de comptage C à une pluralité d'instants par un compteur (116) ;
démoduler ledit signal GPS en un message de navigation incluant l'information
de l'erreur d'horloge, l'ephiméris, l'almanach de satellite pour chacun des satellites dans la constellation et l'information sur le temps universel coordonné ; et
calculer une valeur de temps T conformément à l'information inclue dans ledit message de navigation ;
**caractérisé en ce qu'**on obtient une valeur de temps GPS T pour chaque instant de la pluralité d'instants conformément à l'information inclue dans le message de navigation ;
on détermine une relation entre la valeur de temps GPS T pour un instant et la valeur de comptage C générée audit instant par le calcul d'une pluralité de paramètres $A_K$ au moyen d'un module de système (102) à base desdites valeurs de comptage C et de ladite valeur de temps T pour chaque instant, et on détermine une fonction de relation entre ladite valeur de temps T pour chaque instant et une valeur de comptage C correspondant desdites valeurs de comptage par lesdits paramètres $A_K$, la fonction de relation étant

$$T(C) \approx \sum_{k=0}^{n} A_k \times C^k$$

dans lequel est dénoté par C une valeur de comptage fournie par ledit module d'horloge à un instant sélectionné, par T(C) une valeur de temps GPS pour ledit instant sélectionné, par $A_K$ un paramètre desdits paramètres, et par n un nombre entier fini ;
on détermine une valeur de temps GPS T'estimée à base de ladite fonction de relation et d'une valeur de comptage C' présente dudit compteur (116), en appliquant une fonction de relation

$$T'(C') = \sum_{k=0}^{n} A_k \times C'^k$$

et on détermine une limite d'un bit de donnés dans un signal présent à base de ladite valeur de temps GPS T estimée.

**5.** Procédé selon la revendication 4, le calcul de ladite pluralité de paramètres comprenant les étapes de :

mémoriser dans une mémoire (126) ladite pluralité de valeurs de comptage C fournie à ladite pluralité d'instants ;
mémoriser dans ladite mémoire (126) une pluralité de valeurs de temps T indicative desdits instants, lesdites valeurs de temps T étant calculées par le module de système (102) conformément audit message de navigation ; et
calculer ladite pluralité de paramètres $A_K$ à base de la pluralité de valeurs de comptage C et ladite pluralité de valeurs de temps T.

**6.** Procédé selon la revendication 4, dans lequel la détermination de ladite valeur de temps estimée comprend les étapes de :

continuer à fournir les valeurs de comptage C par ledit compteur (116) lorsque un signal présent n'est pas acquis ; et
déterminer la valeur de temps T estimée à base de ladite fonction de relation et à base de la valeur de comptage C présente du compteur (116) lorsque un signal est acquis de nouveau.

FIG. 1

FIG. 2

FIG. 3

EP 2 284 572 B1

400

```
                                                               ┌─402
┌─────────────────────────────────────────────────────────────┐
│       PROVIDING MULTIPLE COUNTER VALUES BY A COUNTER AT       │
│                     MULTIPLE TIME POINTS                      │
└─────────────────────────────────────────────────────────────┘
                              │
                              ▼                               ┌─404
┌─────────────────────────────────────────────────────────────┐
│   OBTAINING A TIME VALUE FOR EACH TIME POINT ACCORDING        │
│                 TO A SET OF ACQUIRED SIGNALS                  │
└─────────────────────────────────────────────────────────────┘
                              │
                              ▼                               ┌─406
┌─────────────────────────────────────────────────────────────┐
│  CALCULATING A SET OF PARAMETERS BY A SYSTEM MODULE           │
│  BASED ON THE COUNTER VALUES AND THE TIME VALUE FOR           │
│                     EACH TIME POINT                           │
└─────────────────────────────────────────────────────────────┘
                              │
                              ▼                               ┌─408
┌─────────────────────────────────────────────────────────────┐
│   DETERMINING AN ESTIMATED TIME VALUE BASED ON THE            │
│   PARAMETERS AND A PRESENT COUNTER VALUE FROM THE             │
│                        COUNTER                               │
└─────────────────────────────────────────────────────────────┘
```

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060274821 A1

- US 20030227963 A1